# FASCICULE DE BREVET EUROPEEN

(11) **EP 2 380 694 B1**
(45) Date de publication et mention de la délivrance du brevet: **11.06.2014**
(21) Numéro de dépôt: 11350002.9
(22) Date de dépôt: 08.04.2011
(51) Int. Cl.: B23K 31/02, B23K 37/04, B23Q 3/18, E01D 21/00, E04B 1/24

(54) **Table et procédé d'assemblage de profilés en I**
Verbindentisch und-verfahren für I-Träger
Assembling table for and process of I-beams

(30) Priorité: 20.04.2010 FR 1001670
(43) Date de publication de la demande: 26.10.2011
(73) Titulaire: Ponthoreau, Philippe, 85250 St. Fulgent (FR)
(72) Inventeur: Ponthoreau, Philippe, 85250 St. Fulgent (FR)
(74) Mandataire: Tournel, Jean Louis

(56) Documents cités:
- FR-A1- 2 662 231
- US-A- 3 870 853
- DATABASE WPI Week 199227 Thomson Scientific, London, GB; AN 1992-224945 XP002613120, -& SU 1 668 086 A1 (UKRNIIPROEKTSTALKONSTRUKTSIYA) 7 août 1991 (1991-08-07)
- DATABASE WPI Week 198114 Thomson Scientific, London, GB; AN 1981-24816D XP002613121, -& SU 749 608 A1 (WELDING DES-CONS) 28 juillet 1980 (1980-07-28)
- DATABASE WPI Week 197921 Thomson Scientific, London, GB; AN 1979-40173B XP002613122, -& SU 616 105 A (WELDING PROD INST) 7 juillet 1978 (1978-07-07)

## Description

L'invention se rapporte à une table d'assemblage d'un profilé par exemple en I et à un procédé d'assemblage d'une poutre en I, conformément au préambule des revendications 1 et 12.

Beaucoup de profilés métalliques en I sont obtenus par déformation à froid ou à chaud d'une barre de métal mais lorsque l'on veut un profilé de dimension d'âme importante la seule possibilité est d'assembler des plaques de métal, l'une constituant l'âme du profilé et les deux autres les ailes du I.

Pour ce faire avant de souder les différentes plaques, il faut les positionner les unes par rapport aux autres avant de les souder et pour cela on utilise une table d'assemblage. En vue de dessus cette table est rectangulaire.

Une table d'assemblage est connue du document FR2662231.

Cette table comprend un châssis portant un ensemble de surfaces d'appui réglables en hauteur destinées à porter l'âme du profilé, un ensemble de moyens de positionnement d'une première aile du profilé servant de référentiel d'assemblage, un ensemble de chariots portant des moyens de maintien de la seconde aile du profilé, et des moyens presseurs destinés à appliquer les ailes vers l'âme. Ces moyens presseurs sont des vérins.

L'ensemble des moyens de positionnement de la première aile s'étend au long d'un des bords longitudinaux de la table.

Cet ensemble de moyens de positionnement de la première aile, fixe par rapport au châssis, est constitué pour former une sorte de logement dans lequel, on glisse l'aile en position verticale, des vérins étant prévus pour pousser l'aile vers l'âme. La face verticale du logement tournée vers l'extérieur formant face de référence.

A l'opposé de ces moyens de positionnement sont localisés des moyens de maintien de la seconde aile, ces moyens étant portés par des groupes de chariots mobiles pour s'adapter à la hauteur de l'âme.

Plus précisément, il est constitué un ensemble mobile composé d'une poutre supportée par deux chariots montés coulissants sur un axe pour être pré positionnés. Cette poutre porte des vérins qui viennent pousser l'aile en direction de l'âme. Pour éviter le flambage des tiges de vérin, ces tiges sont courtes.

On positionne donc le chariot suffisamment près de l'âme, on le verrouille en translation avec un moyen approprié et on met en action les vérins qui s'appuyant sur les chariots immobilisés déploient leurs tiges dont l'extrémité libre va venir pousser sur la deuxième aile.

Lors de cette poussée il faut prendre en compte que de l'autre coté, d'autres vérins exercent une force contraire. Il faut donc régler les pressions convenablement.

A chaque changement de dimension d'âme, il faut repositionner les chariots, les verrouiller et ensuite mettre en pression les vérins ce qui est long.

L'ensemble des vérins est relié à une seule pompe et on applique donc la même force.

On connait SU 1668086, représentant l'état de la technique sur lequel est basé le préambule des revendications 1 et 12, un système faisant appel à un vérin agissant sur un levier pour déplacer un piston monté sur un support fixe. La hauteur de l'âme doit rester dans une fourchette étroite.

On connait SU 749608 un système faisant appel à chariot mobile portant un vérin d'appui. Ce chariot soutient l'âme et il ne peut donc exercer une force d'application de la deuxième aile vers l'âme en se déplacant. C'est le pivotement d'une table de réception de l'aile qui vient appliquer l'aile contre l'âme.

On connait SU 616105 une machine de soudage en continue d'une poutre pré assemblée, qui circule entre deux rouleaux opposés.

L'invention se propose d'apporter une solution plus souple et beaucoup plus rapide.

A cet effet l'invention a pour objet une table et un procédé d'assemblage d'un profilé en I tels que définis dans les revendications 1 et 12.

L'invention sera bien comprise à l'aide de la description ci après faite à titre d'exemple en regard du dessin qui représente schématiquement :
FIG 1 : Une table de montage

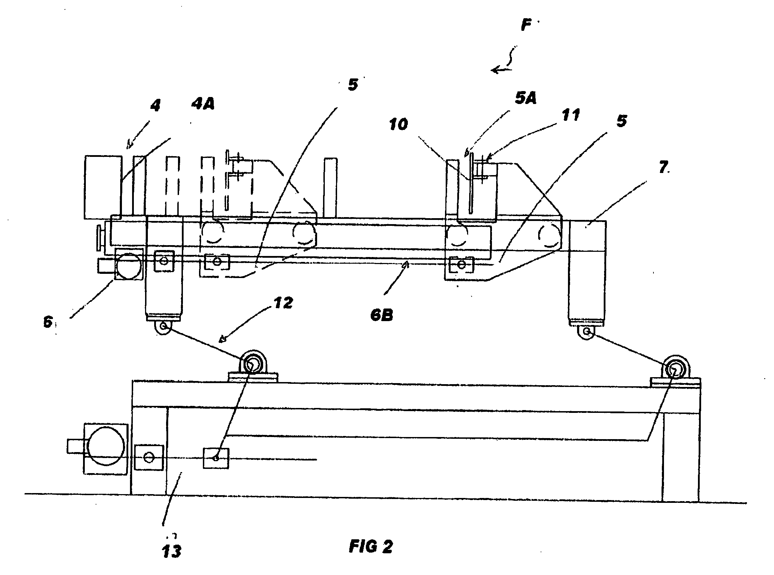

FIG 2 : Une vue latérale d'un détail de la table

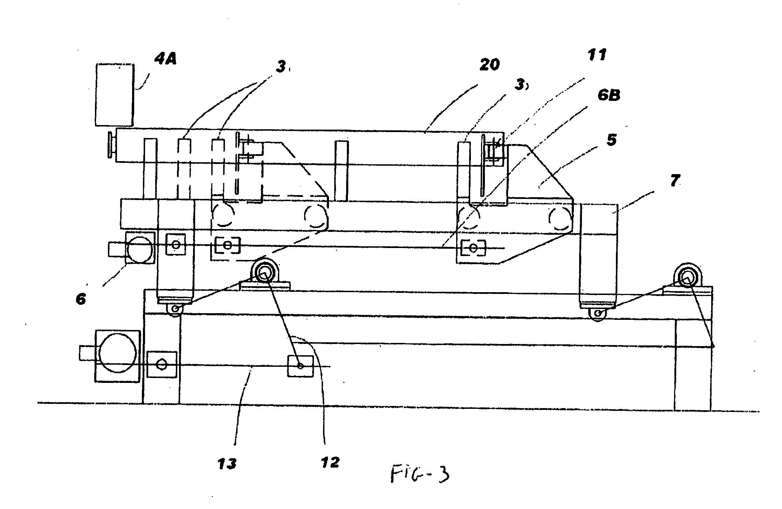

FIG 3 : Le détail de la figure 2 vu dans une seconde position.

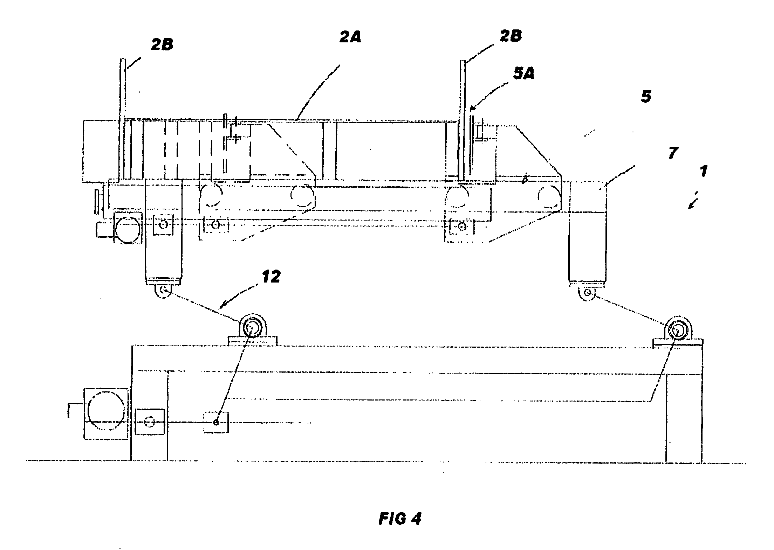

FIG 4 : Une vue latérale avec un profilé en cours d'assemblage
FIG 5 : Une vue latérale d'une variante de table

En se reportant au dessin, on voit une table 1 d'assemblage d'un profilé type I composé d'une âme 2A et de deux ailes 2B une inférieure et l'autre supérieure Pour cette construction, on va découper dans des tôles l'âme et les deux ailes. L'invention est décrite pour un profilé en métal mais s'applique également aux profilés composites ou en bois.

Au moyen de la table, on positionne les éléments à assembler avant de souder les ailes sur les bords longitudinaux de l'âme.

Les moyens de soudage ne sont pas représentés sur les figures jointes. Cela peut être un ou plusieurs robots de soudure ou fait manuellement.

La table comprend un châssis portant un ensemble de surfaces 3 d'appui fixes ou réglables en hauteur destinées à porter l'âme du profilé, un ensemble de moyens 4 de positionnement d'une première aile du profilé servant de référentiel d'assemblage, les dits moyens 4 de positionnement étant distribués au long d'un des bords longitudinaux de la table, à l'opposé de ces moyens de positionnement, un ensemble de chariots 5 portant des moyens de maintien 5A de la seconde aile du profilé, et des moyens presseurs développant une force d'application destinée à appliquer les ailes vers l'âme.

Avantageusement, l'ensemble des moyens 4 de positionnement de la première aile présente une face 4A de référence tournée vers les chariots 5 et les chariots sont motorisés pour les déplacer vers l'âme et ensuite générer la force d'application F des ailes sur l'âme 1 et les axes de déplacements des dits chariot étant des axes numériques. Ces moyens 4 de positionnement sont aptes à tenir l'aile quasi verticalement, c'est-à-dire qu'ils présentent des faces opposées entre lesquelles s'insère l'aile. Il en est de même avec ceux des chariots.

C'est donc directement la motorisation du chariot 5 qui développe la force d'application et ce ne sont plus des vérins portés par les chariots qui développent la force d'application. Ici c'est le même moteur qui vient approcher la seconde aile et ensuite appliquer la dite aile avec une force appropriée.

Chaque chariot 5 qui constitue donc un moyen presseur peut exercer la force appropriée à sa position. Cet aspect est très intéressant pour des profilés cintrés ou des profilés dont la hauteur d'âme est variable ou dont l'épaisseur de l'aile est variable.

Cette solution permet à la fois de déplacer, dans un premier temps, les chariots 5 pour positionner la deuxième aile composant le profilé et ensuite de créer la force d'application pour le maintien de ces éléments le temps de la soudure ou du collage alors qu'auparavant, il fallait positionner les chariots manuellement, les verrouiller en cette position avec un système du type bride ou goupille, puis actionner les vérins portés par les chariots. Ici le système va, conformément à la présente invention, directement faire l'approche en utilisant un axe numérique avec principalement un critère de vitesse et ensuite appliquer les ailes contre l'âme en développant une force de bridage qui sera imposée par le moteur électrique qui déplace le chariot et qui peut s'adapter à la position du chariot et aux spécificités du profilé à construire, lechariot dans cette seconde phase se déplace avec un critère de force, on pourrait dire qu'il ne se préoccupe plus de sa position sur l'axe de déplacement.

Du fait que la face dite de référence des moyens de positionnement 4 est tournée vers le chariot, le déplacement dudit chariot 5 va pousser également l'âme contre la première aile.

Il est important de bien placer contre l'âme les ailes car sinon la soudure sera mauvaise. Concernant les moyens 5A de maintien de la seconde aile, ils sont portés par des chariots 5 et une transmission 6 motorisée déplace le chariot. On utilisera de préférence un moteur 6A électrique et une transmission 6B à vis/écrou. On peut utiliser un système à crémaillère ou d'autres moyens de transmission.

Dans une forme de réalisation, lors de la mise en pression, on contrôle l'arrêt du moteur électrique par mesure d'une résistance au déplacement du moteur ou de l'effort produit par le moteur telle une mesure du sur-couple dudit moteur (mesure du déphasage courant/tension). Il est donc prévu un dispositif de détermination de l'effort engendré par le moteur. Ainsi, lorsque le chariot rencontre l'aile, une force résistante agit sur le déplacement du chariot qui se traduit électriquement par une variation du déphasage entre la tension et le courant du moteur électrique entrainant le chariot.

Dans une autre forme de réalisation, on équipe le chariot d'un capteur de déformation ou d'un autre type de capteur apte à produire un signal proportionnel à une force.

Le moteur entrainera, par exemple une vis d'un système vis écrou, l'écrou étant le chariot. L'arrêt en rotation de la vis constitue un « anti retour mais dans certains cas, il faudra installer un système de blocage (frein) comme pour les vis à billes.

Un moyen de détermination de la position du chariot tel un codeur permet d'adapter la vitesse de déplacement du chariot et connaitre sa position, cette vitesse sera réduite lorsque le chariot sera proche de sa position finale. Cela permet de maitriser le contrôle du recul du chariot. Le codeur envoie des impulsions qui seront prises en compte par des moyens numériques (automate, microprocesseur etc) qui commandent, par exemple, un variateur. On utilisent donc des axes numériques.

Les chariots sont indépendants, c'est-à-dire qu'ils ne sont pas couplés deux à deux par une liaison mécanique.

Les moteurs sont commandés par une carte pilotée par un microprocesseur.

La surface du chariot venant en contact avec la deuxième aile est une face 10 d'une pièce 11 articulée sur la face avant du chariot ce qui permet de traiter des profilés dont la hauteur d'âme peut varier au long de l'axe longitudinal de l'âme (poutre à inertie variable).

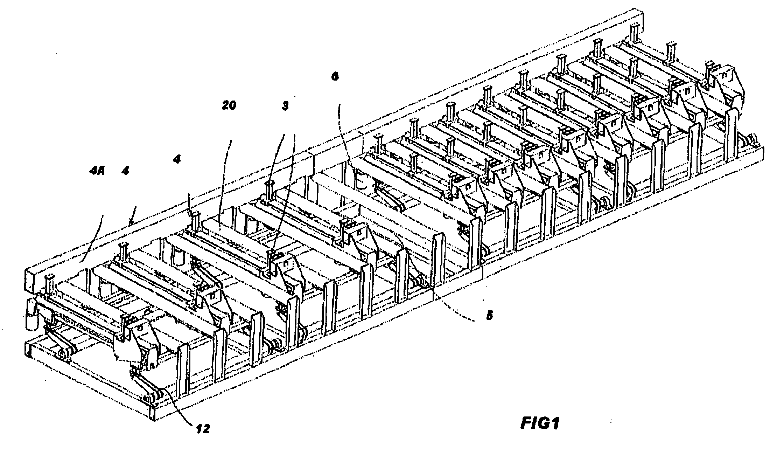

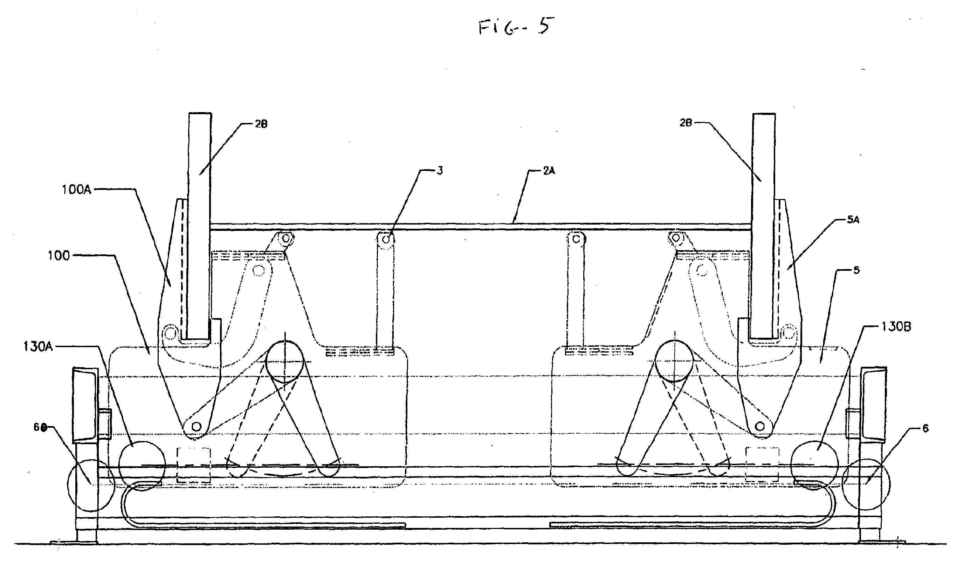

On voit en figure 1 que cette face de référence est fixe par rapport au châssis et est présentée par une poutre. Dans une variante de réalisation figure 5, la face de référence est constituée de faces élémentaires mobiles motorisées qui se déplacent au long d'un axe numérique de sorte à pouvoir constituer des poutres cintrées.

Ces faces de référence motorisées sont portées par des équipages 100 guidés en translation.

Les axes de déplacement de ces faces élémentaires formant références sont des axes numériques distincts de ceux des chariots 5.

Un moteur électrique 60 entrainant un système vis/écrou déplace chaque face 4A de référence, le moteur étant piloté pour se positionner au point désiré défini sur l'axe numérique. Le système vis/écrou permet de verrouiller les faces de références en coupant l'alimentation électrique du moteur

Les surfaces d'appui de l'âme et/ou des ailes seront, de préférence motorisées avec un capteur de position pour un réglage automatique selon des axes numériques.

Il est apparu que pour augmenter la production, on pouvait travailler en temps masqué.

En effet, pour construire le profilé, après avoir appliqué les ailes sur l'âme, et avant de faire une soudure au long des zones de contact, on pointe c'est-à-dire on effectue localement de courts cordons de soudure afin d'immobiliser les pièces pour ensuite faire une soudure définitive qui peut être effectuée sur une autre table.

Avantageusement dans une forme de réalisation, la table comprend des rouleaux 20 parallèles entre eux et écartés définissant des espaces dans certains desquels est monté un support 7 portant les surfaces d'appui de l'âme, au moins une fraction des moyens de positionnement de la première aile, le chariot et sa transmission motorisée, le dit support étant mobile pour s'escamoter sous les rouleaux reprenant la charge du profilé.

Le support est par exemple monté sur le châssis au moyen de biellettes 11 pour former un parallélogramme déformable. Un moyen de manoeuvre 13 éventuellement motorisé modifie le parallélogramme. Ici les biellettes sont coudées, le point d'articulation étant au niveau du coude.

Ainsi lors du positionnement des éléments constituant la poutre, les supports sont en position haute au dessus du plan formé par les rouleaux .Lorsque les courts cordons de soudure ont solidarisé les éléments du I, les supports sont abaissés sous les rouleaux qui reçoivent donc la charge du profile qui peut être transféré latéralement sur une autre table où se terminera la soudure.

Il a donc été prévu dans le prolongement de la table précitée, une table dite accessoire pour souder définitivement les éléments du profilé qui a été transféré de la table d'assemblage vers cette table accessoire.

Compte tenu de la charge, les rouleaux équipant les tables sont motorisés.

La face de référence est une face continue présentée par une poutre (figure 1) qui s'étend au long d'un bord de la table mais ce peut être un ensemble de faces, chacune étant d'étendue limitée, présentées par un montant portée chacune par exemple par le support 7, les dites faces étant alignées ou positionnées formant une seule face de référence. Comme indiqué plus haut ces faces dites référentielles peuvent être mobiles à l'aide d'un moteur dont l'axe de déplacement des dites faces référentielles est parallèle à l'axe de déplacement des chariots mais non colinéaire. Les déplacements sont pilotés en référence à un axe numérique

Un automate programmable contrôle les différents paramètres de déplacements suite aux ordres donnés par l'opérateur qui entrera les cotes de la poutre.

On voit que le chariot porte une des surfaces d'appui.

Pour automatiser le procédé, on utilisera, conformément à la présente invention, des axes numériques représentant les axes de déplacement du chariot et/ou des surfaces d'appui et/ou des biellettes et/ou des surfaces de référence ou toutes autres surfaces mobiles. On pourra ainsi introduire des valeurs au moyen d'une interface et les mémoriser.

Pour produire des poutres ayant des ailes de largeurs différentes, les moyens 4 de positionnement de la première aile sont mobiles en hauteur indépendamment l'une de l'autre et motorisés pour se déplacer suivant des axes numériques ainsi que ceux 5A pour tenir la seconde aile. L'âme sera posée sur les surfaces d'appui et on positionnera en hauteur les deux ailes au moyens des moteurs 130A et 130B avant de déplacer au moins les chariots 5 portant la seconde aile.

Par exemple pour une poutre cintrée, on positionne les moyens de positionnement 4 de la première aile en utilisant les axes numériques des équipages 100 portant les dits moyens de positionnement, puis après mise en place de l'âme sur les surfaces 3 d'appui, on déplace les chariots 5 portant les moyens de maintien de la seconde aile jusqu'à une position proche du contact de l'aile seconde avec l'âme en se référant, conformément à l'invention, à l'axe numérique associé au dit chariot pour ensuite continuer le déplacement mais en prenant en compte l'effort produit par le moteur qui développe alors une force d'application. Lorsque le module de cette force atteint un seuil, on stoppe le moteur. On peut alors procéder aux premiers points de soudure.

Les déplacements des chariots, des moyens de maintien, des surfaces d'appuis sont pilotés par rapport à des axes numériques

On met donc en oeuvre un procédé d'assemblage d'une poutre en I utilisant une table d'assemblage comprenant un châssis portant un ensemble de surfaces 3 d'appui destinées à supporter l'âme du profilé, un ensemble de moyens 4 de positionnement d'une première aile du profilé servant de référentiel d'assemblage, les dits moyens de positionnement étant distribués au long d'un des bords longitudinaux de la table, à l'opposé de ces moyens de positionnement, un ensemble de chariots 5 portant des moyens de maintien de la seconde aile du profilé, et des moyens presseurs développant une force d'application destinée à appliquer les ailes vers l'âme ce procédé étant caractérisé en ce que chaque chariot est pourvu de son propre moteur qui le déplace suivant un axe numérique vers l'âme du profilé selon un mode d'approche du chariot puis d'un mode de création d'une force d'application.

Une programmation faite à partir des informations sur les épaisseurs des ailes, la hauteur de l'âme va commander le déplacement du chariot 5 lors de l'approche avec une résistance au déplacement quasi nulle ( mode d'approche) puis après accostage produire un couple moteur pour brider le profilé en I (mode de création d'une force). Le mode d'approche privilégie la vitesse et le mode de création d'une force est basé sur une résistance à l'avancement.

## Revendications

1. Table d'assemblage d'un profilé en I comprenant un châssis portant un ensemble de surfaces (3) d'appui destinées à supporter l'âme du profilé, un ensemble de moyens (4) de positionnement d'une première aile du profilé servant de référentiel d'assemblage, les dits moyens de positionnement *présentant des faces opposées pour un maintien vertical* de la dite aile, *ces moyens* étant distribués au long d'un des bords longitudinaux de la table, à l'opposé de ces moyens de positionnement, un ensemble de chariots (5) portant des moyens de maintien de la seconde aile du profilé, et des moyens (6) presseurs développant une force d'application destinée à appliquer les ailes vers l'âme cette table étant **caractérisée en ce que** l'ensemble des moyens de positionnement de la première aile présente une face (4A) de référence tournée vers les chariots (5) et les chariots (5) sont *chacun motorisés par un moteur électrique* pour les déplacer vers l'âme, *dans un premier temps selon un mode d'approche utilisant un critère de vitesse, le déplacement des dits chariots (5) étant alors pilotés en référence chacun a un axe numérique associé au dit chariot* et ensuite *selon un critère de force pour la création* d'une force d'application (F) des ailes sur *l'âme (1) au moyen d'un dispositif de détermination de l'effort engendré par le moteur.*

2. Table d'assemblage selon la revendication 1 **caractérisée en ce que** le chariot (5) est déplacé par une transmission (6) à vis/écrou motorisée par ledit moteur électrique.

3. Table d'assemblage selon la revendication 1 **caractérisée en ce qu'**elle comprend un capteur apte à produire un signal proportionnel à une force.

4. Table d'assemblage selon la revendication 1 **caractérisée en ce que** les surfaces (3) d'appui de l'âme sont fixes ou mobiles.

5. Table d'assemblage selon l'une quelconque des revendications précédentes **caractérisée en ce que** la table comprend des rouleaux (20) parallèles entre eux et écartés définissant des espaces dans certains desquels est monté un support (7) portant les surfaces (3) d'appui de l'âme, au moins une fraction des moyens de positionnement de la première aile, le chariot et sa transmission motorisée, le dit support étant mobile pour s'escamoter sous les rouleaux (20) reprenant la charge du profilé.

6. Table d'assemblage selon la revendication 5 **caractérisée en ce que** le suppont (7) est monté sur le châssis au moyen de biellettes pour former un parallélogramme.

7. Table d'assemblage selon la revendication 1 **caractérisée en ce que** la face de référence (4A) est une face continue fixe par rapport au châssis.

8. Table d'assemblage selon la revendication 1 **caractérisée en ce que** la face de référence (4A) est constituée par des faces d'étendue réduite.

9. Table d'assemblage selon la revendication 1 **caractérisé en ce que** les moyens de positionnement de la première aile sont mobiles suivant un axe parallèle à l'axe de déplacement des chariots (5) sont motorisés et pilotés en référence à un axe numérique.

10. Table d'assemblage selon la revendication 4 caractérisée en que le réglage en hauteur des surfaces (3) d'appui est motorisé et piloté en référence à un axe numérique.

11. Table d'assemblage selon la revendication associé au dit chariot (5) **caractérisée en ce que** les moyens de positionnement de la première aile et de la deuxième aile sont mobiles verticalement et sont pilotés indépendamment en référence à un axe numérique.

12. Procédé d'assemblage d'une poutre en I mettant en oeuvre une table d'assemblage comprenant un châssis portant un ensemble de surfaces (3) d'appui destinées à supporter l'âme du profilé, un ensemble de moyens (4) de positionnement d'une première aile du profilé servant de référentiel d'assemblage, les dits moyens de positionnement étant distribués au long d'un des bords longitudinaux de la table, à l'opposé de ces moyens de positionnement, un ensemble de chariots (5) portant des moyens de maintien de la seconde aile du profilé, et des moyens presseurs développant une force d'application destinée à appliquer les ailes vers l'âme ce procédé étant **caractérisé en ce que** chaque chariot (5) est pourvu de son propre moteur qui le déplace vers l'âme du profilé selon un mode d'approche du chariot *en référence* à un axe numérique associé au dit chariot (5) *avec un critère de vitesse* puis selon un mode de création d'une force d'application *par mesure d'une résistance au déplacement dudit chariot (5).*

## Patentansprüche

1. Zusammenbautisch eines I-Profils, der ein Chassis aufweist, das eine Einheit von Auflageoberflächen (3) trägt, die dazu bestimmt sind, die Seele des Profils zu tragen, eine Einheit Mittel (4) zum Positionieren eines ersten Flügels des Profils, der als Zusammenbaubezug dient, wobei die Positionierungsmittel gegenüberliegende Flächen für ein vertikales Halten des Flügels aufweisen, wobei diese Mittel entlang eines der Längsränder des Tischs verteilt sind, gegenüber diesen Positionierungsmitteln eine Einheit Wagen (5), die Haltemittel des zweiten Flügels des Profils tragen, und Druckmittel (6), die eine Anlegekratt entwickeln, die dazu bestimmt ist, die Flügel zu der Seele dieses Tisches anzulegen, **dadurch gekennzeichnet, dass** die Einheit der Positionierungsmittel des ersten Flügels eine Bezugsfläche (4A) aufweist, die zu den Wagen (5) gerichtet ist, und dass die Wagen (5) jeweils von einem Elektromotor angetrieben sind, um sie zu der Seele zu bewegen, zuerst gemäß einem Annäherungsmodus, der ein Geschwindigkeitskriterium verwendet, wobei die Bewegung der Wagen (5) jeweils in Bezug auf eine zu dem Wagen gehörende numerische Achse gesteuert ist, und dann gemäß einem Kraftkriterium für das Schaffen einer Anlegekraft (F) der Flügel auf der Seele (1) mittels einer Vorrichtung zum Bestimmen der von dem Motor bewirkten Kraft.

2. Zusammenbautisch nach Anspruch 1, **dadurch gekennzeichnet, dass** der Wagen (5) von einem Getriebe (6) mit Schraube/Mutter, das von dem Elektromotor angetrieben wird, bewegt wird.

3. Zusammenbautisch nach Anspruch 1, **dadurch gekennzeichnet, dass** er einen Sensor aufweist, der ein Signal erzeugen kann, das zu einer Kraft anteilsmäßig ist.

4. Zusammenbautisch nach Anspruch 1, **dadurch gekennzeichnet, dass** die Auflageoberflächen (3) der Seele stationär oder beweglich sind.

5. Zusammenbautisch nach einem der vorhergehenden Ansprüche, **dadurch gekennzeichnet, dass** der Tisch Rollen (20) aufweist, die zueinander parallel und beabstandet sind, die Räume definieren, wobei in bestimmten dieser Räume ein Träger (7) montiert ist, der die Auflageoberflächen (3) der Seele, mindestens einen Teil der Positionierungsmittel des ersten Flügels, den Wagen und sein motorisiertes Getriebe trägt, wobei der Träger beweglich ist, um unter die Rollen (20), die die Last des Profils aufnehmen, einzufahren.

6. Zusammenbautisch nach Anspruch 5, **dadurch gekennzeichnet, dass** der Träger (7) mittels Schwingarmen auf das Chassis montiert ist, um ein Parallelogramm zu bilden.

7. Zusammenbautisch nach Anspruch 1, **dadurch gekennzeichnet, dass** die Bezugsfläche (4A) eine ununterbrochene Fläche ist, die in Bezug auf das Chassis stationär ist.

8. Zusammenbautisch nach Anspruch 1, **dadurch gekennzeichnet, dass** die Bezugsfläche (4A) aus Flächen mit verringertem Ausmaß besteht.

9. Zusammenbautisch nach Anspruch 1, **dadurch gekennzeichnet, dass** die Positionierungsmittel des ersten Flügels, die entlang einer Achse parallel zu der Bewegungssachse der Wagen (5) beweglich sind, motorisiert und in Bezug auf eine numerische Achse gesteuert sind.

10. Zusammenbautisch nach Anspruch 4, **dadurch gekennzeichnet, dass** die Höheneinstellung der Auflageoberflächenteile (3) motorisiert und in Bezug auf eine numerische Achse gesteuert ist.

11. Zusammenbautisch nach Anspruch 1, **dadurch gekennzeichnet, dass** die Positionierungsmittel des ersten Flügels und des zweiten Flügels vertikal beweglich und unabhängig in Bezug auf eine numerische Achse gesteuert sind.

12. Verfahren zum Zusammenbauen eines I-Balkens, das einen Zusammenbautisch umsetzt, der ein Chassis aufweist, das eine Einheit von Auflageoberflächen (3) trägt, die dazu bestimmt sind, die Seele des Profils zu tragen, eine Einheit Mittel (4) zum Positionieren eines ersten Flügels des Profils, der als Zusammenbaubezug dient, wobei die Positionierungsmittel entlang eines der Längsränder des Tisches verteilt sind, gegenüber diesen Positionierungsmitteln, eine Einheit von Wagen (5), die Mittel zum Halten des zweiten Flügels des Profils tragen, und Druckmittel, die eine Anlegekraft entwickeln, die dazu bestimmt ist, die Flügel zu der Seele anzulegen, Verfahren **dadurch gekennzeichnet, dass** jeder Wagen (5) mit seinem eigenen Motor versehen ist, der ihn zu der Seele des Profils gemäß einem Annäherungsmodus des Wagens unter Bezug auf eine numerische Achse, die zu dem Wagen (5) gehört, mit einem Geschwindigkeitskriterium und dann gemäß einem Modus zum Schaffen einer Anlegekraft durch Messung eines Widerstands gegen die Bewegung des Wagens (5) bewegt.

## Claims

1. Table for assembling an I-shaped profile, comprising a frame carrying a set of support surfaces (3) intended to support the web of the profile, a set of means (4) for positioning a first flange of the profile serving as an assembly reference, said positioning means *having opposite faces for vertical holding* of said flange, *these means* being distributed along one of the longitudinal edges of the table, opposite to these positioning means, a set of carriages (5) carrying means for holding the second flange of the profile, and pressing means (6) developing an application force intended to apply the flanges towards the web, this table being **characterised in that** all the means for positioning the first flange have a reference face (4A) turned towards the carriages (5) and the carriages (5) are each *driven by an electric motor* in order to move them towards the web, *initially in an approach mode using a speed criterion, the movement of said carriages (5) then being controlled each with reference to a numerical axis associated with said carriage and according to a force criterion for the creation* of a force (F) applying the flanges to the web (1) *by means of a device for determining the force generated by the motor.*

2. Assembly table according to claim 1, **characterised in that** the carriage (5) is moved by a screw/nut transmission (6) driven by said electric motor.

3. Assembly table according to claim 1, **characterised in that** it comprises a sensor able to produce a signal proportional to a force.

4. Assembly table according claim 1, **characterised in that** the surfaces (3) supporting the web are fixed or movable.

5. Assembly table according to any one of the preceding claims, **characterised in that** the table comprises rollers (20) parallel to one another and separated, defining spaces in some of which a support bracket (7) is mounted carrying the surfaces (3) supporting the web, at least a proportion of the means for positioning the first web, the carriage and the motorised transmission thereof, said support being movable in order to retract under the rollers (20) assuming the load of the profile.

6. Assembly table according to claim 5, **characterised in that** the support bracket (7) is mounted on the frame by means of links in order to form a parallelogram.

7. Assembly table according to claim 1, **characterised in that** the reference face (4A) is a continuous face fixed with respect to the frame.

8. Assembly table according to claim 1, **characterised in that** the reference face (4A) is formed by faces of reduced extent.

9. Assembly table according to claim 1, **characterised in that** the means for positioning the first flange are movable along an axis parallel to the movement axis of the carriages (5) and are motorised and controlled with reference to a numerical axis.

10. Assembly table according to claim 4, **characterised in that** the adjustment of the support surfaces (3) for height is motorised and controlled with reference to a numerical axis.

11. Assembly table according to claim 1, **characterised in that** the means for positioning the first flange and the second flange are movable vertically and are controlled independently with reference to a numerical axis.

12. Method for assembling an I-shaped beam using an assembly table comprising a frame carrying a set of support surfaces (3) intended to support the web of the profile, a set of means (4) for positioning a first flange of the profile serving as an assembly reference, said positioning means being distributed along one of the longitudinal edges of the table opposite to these positioning means, a set of carriages (5) carrying means for holding the second flange of the profile, and presser means developing an application force intended to apply the flanges towards the web, this method being **characterised in that** each carriage (5) is provided with its own motor that moves it towards the web of the profile in an approach mode of the carriage *with reference* to a numerical axis associated with said carriage (5) *with a speed criterion* and then in a mode of creating an application force *by measuring a resistance* to *the movement of said carriage (5)*.
